# EUROPEAN PATENT APPLICATION

(11) **EP 3 633 242 A1**
(43) Date of publication of application: **08.04.2020**
(21) Application number: 18810831.0
(22) Date of filing: 29.05.2018
(51) Int. Cl.: F16J 15/10, B29C 43/18

(54) **METHOD FOR HANDLING GASKET HAVING CARRIER FILM**

(30) Priority: 30.05.2017 JP 2017106680
(71) Applicant: NOK Corporation, Tokyo 105-8585 (JP)
(72) Inventor: YUI Hajime, Fujisawa-shi Kanagawa 251-0042 (JP); OBA Kenichi, Fujisawa-shi Kanagawa 251-0042 (JP)
(74) Representative: TBK
(86) International application number: PCT/JP2018/020486
(87) International publication number: WO 2018/221491

(57) **Abstract**

When a carrier film (41) is removed from a gasket body (31) of a carrier-film-equipped gasket (21), in order to easily remove the gasket body (31) adhering to the carrier film (41) from the carrier film (41), the adhesion area of the gasket body (31) and the carrier film (41) is reduced as a preliminary process of a peeling process of peeling the carrier film (41) from the gasket body (31) against adhesive force in a state where the gasket body (31) is fixed to a base, and then the peeling process is implemented in the state where the adhesion area is reduced. When the gasket body (31) is pressed from the carrier film (41) side with a pressing protrusion portion (72) of a pressing portion (71), the pressing is performed after the positioning on the plane is performed with positioning means (101) by recess/projection engagement provided beforehand between the pressing portion (71) and the carrier-film-equipped gasket (21).

## Description

### Technical Field

The disclosure relates to a method for handling a carrier-film-equipped gasket for removing the carrier film from a gasket body against adhesive force. The gasket of the disclosure is used as a gasket for fuel cells or used as a general gasket for other uses, for example.

### Background Art

As the fuel cell gasket, gaskets of various configurations, such as a rubber-only gasket containing a gasket alone containing a rubber-like elastic body (rubber), a separator-integrated gasket in which a gasket containing a rubber-like elastic body is integrally molded in a separator, and a GDL-integrated gasket in which a gasket containing a rubber-like elastic body is integrally molded in a GDL (gas diffusion layer), are mentioned.

In recent years, a demand for a cost reduction is strong, and therefore the rubber-only gasket capable of satisfying this demand has drawn attention.

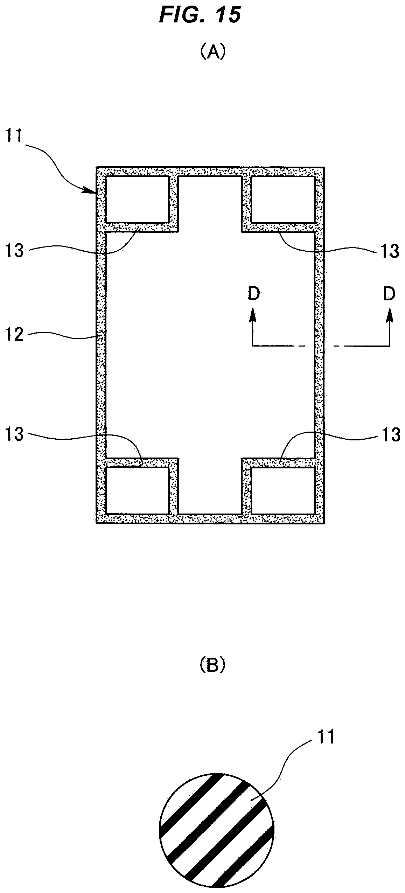

The rubber-only gasket is configured as illustrated in FIGS. 15, for example.

The gasket 11 is formed into a planar shape (plate shape) as a whole, in which an outer peripheral seal 12 for sealing the periphery of a reaction surface of a fuel cell over the entire periphery is provided in a planar rectangular frame shape. There is a necessity of dividing the reaction surface and each manifold of the fuel cell, and therefore an inner seal 13 is integrally provided in each of both ends in the longitudinal direction of the outer peripheral seal 12. The cross-sectional shape of the gasket 11 is a circular cross section, for example, as illustrated in FIG. 15(B).

### Prior Art Document

### Patent Document

Patent Document 1: Japanese Unexamined Patent Application Publication No. 2014-60133 (see gasket 3 in FIG. 1, for example)
Patent Document 2: Japanese Unexamined Patent Application Publication No. 2016-200276

The rubber-only fuel cell gasket 11 has room for further improvement in the following respects.

The fuel cell gasket 11 is generally configured so that, while the planar outer shape is set to a size of about 400 mm × 300 mm, the cross-sectional shape (wire diameter) thereof is set to be as small as about 1 mm to several millimeters. Therefore, the gasket 11 alone is likely to be twisted in carrying or stacking, and therefore the handling workability (handling property) is not good.

### Summary

### Problem to be Solved

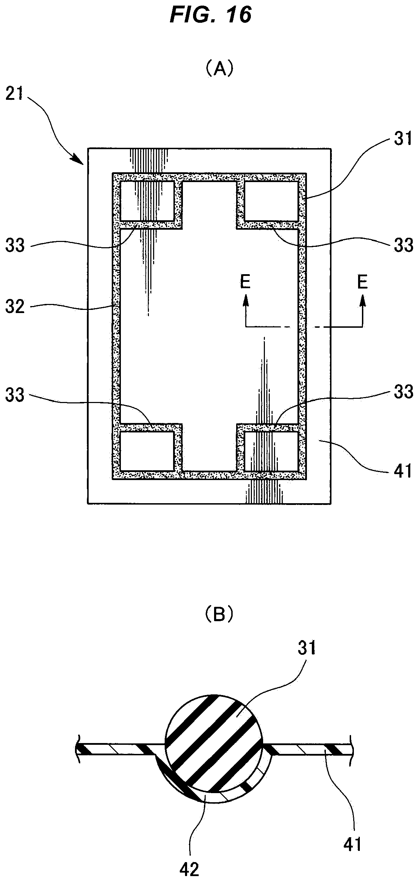

Thus, the applicant of this application has previously developed and proposed a carrier-film-equipped gasket 21 which contains a combination of a rubber-only gasket body 31 and a resin carrier film 41 holding the gasket body 31 as illustrated in FIGS. 16. According to the carrier-film-equipped gasket 21, the rubber-only gasket body 31 is held with the carrier film 41 having strength higher than that of the rubber-only gasket body 31, and therefore the rubber-only gasket body 31 is hard to be twisted and the handling workability can be improved.

The gasket body 31 has a planar shape (plate shape) as a whole, in which an outer peripheral seal 32 for sealing the periphery of a reaction surface of a fuel cell over the entire periphery is provided in a planar rectangular frame shape as with the gasket 11 of FIGS. 15. In order to divide the reaction surface and each manifold of the fuel cell, an inner seal 33 is integrally provided in each of both ends in the longitudinal direction of the outer peripheral seal 32. As illustrated in FIG. 16(B), the cross-sectional shape of the gasket body 31 is a circular cross section. Meanwhile, the carrier film 41 contains a planar rectangular resin film one size larger than the gasket body 31, in which a gasket holder 42 of a three-dimensional shape for holding the gasket body 31 is molded on the plane thereof.

The carrier-film-equipped gasket 21 is manufactured as follows. For the manufacturing, a mold injection-molding the rubber-only gasket body 31 is usable.

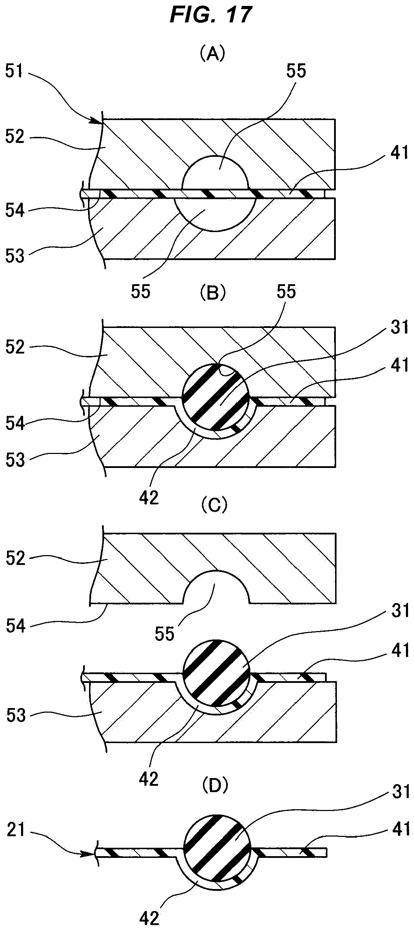

As a process, first, the carrier film 41 having a planar shape cut into a planar shape of a predetermined size is prepared, and then a mold 51 is mold-clamped in a state where the carrier film 41 is held between parting portions 54 of the mold 51 as illustrated in FIG. 17(A). The mold 51 contains a combination of an upper mold (one split mold) 52 and a lower mold (the other split mold) 53, in which one cavity 55 is provided corresponding to each of the parting portions 54 of both the molds 52, 53. The entire surface of the carrier film 41 originally has a planar shape, and therefore is brought into a state of crossing the inside of the cavities 55.

Subsequently, as illustrated in FIG. 17(B), a molding material for molding the gasket body 31 is filled into the cavities 55, and then heated, for example, to mold the gasket body 31. When the molding material is filled into the cavities 55, a part on the plane of the carrier film 41 is pressed against the inner surface of the cavity 55 of the lower mold 53 by the molding material filling pressure to be deformed (plastic deformation) into the shape along the inner surface of the cavity 55, whereby the gasket holder 42 having a three-dimensional shape is molded.

Subsequently, after the molding of the gasket body 31, the mold is opened as illustrated in FIG. 17(C), and then the gasket body 31 and the carrier film 41 are simultaneously taken out from the mold 51 as illustrated in FIG. 17(D). The taken-out gasket body 31 and carrier film 41 are brought into a combined state where the gasket body 31 is held by the carrier film 41. Then, a product is carried or stored, for example, in the combined state. The gasket body 31 held by the carrier film 41 is hard to be twisted, for example, and thus the handling workability is further improved as compared with the case of handling the gasket body 31 alone.

In attaching the gasket body 31 to a fuel cell stack, the carrier film 41 is removed from the gasket body 31, and then only the gasket body 31 is attached thereto.

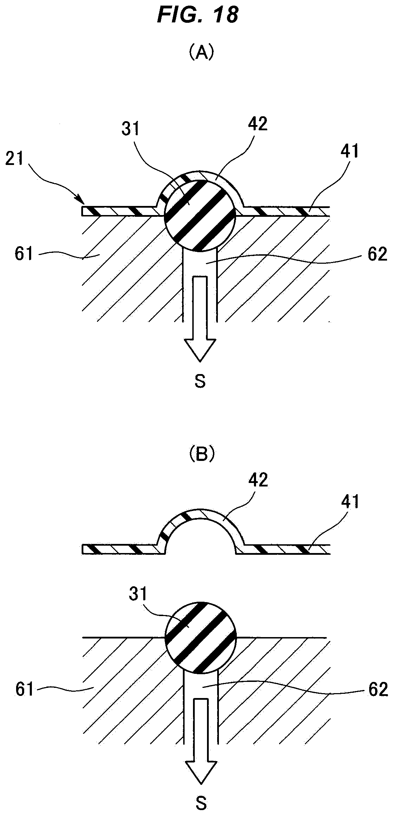

In removing the carrier film 41 from the gasket body 31, the gasket body 31 is set to an adsorption portion 62 of an evacuation mechanism 61, the gasket body 31 is fixed (adsorbed) by performing evacuation (arrow S), and then the carrier film 41 is removed from the gasket body 31 in this state as illustrated in FIGS. 18(A), 18(B), for example. At this time, the carrier film 41 is not stuck to the gasket body 31, and therefore the carrier film 41 is to be easily removable at this time. However, when the gasket body 31 has adhesiveness on the surface thereof due to the material characteristic thereof or the like, and thus adheres to the carrier film 41, the carrier film 41 needs to be strongly peeled from the gasket body 31, which makes the removal difficult.

It is an object to provide a method for handling a carrier-film-equipped gasket which enables easy removal of a resin carrier film even when a gasket body adheres to the carrier film.

### Means for Solving the Problem

A method for handling a carrier-film-equipped gasket of the disclosure includes coupling positioning means by recess/projection fitting provided between the carrier-film-equipped gasket, which contains a combination of a rubber-only gasket body and a resin carrier film holding the gasket body, and a pressing portion pressing the gasket body from the carrier film side in such a manner as to position the carrier-film-equipped gasket and the pressing portion on the plane, pressing the gasket body from the carrier film side with a pressing protrusion portion of the pressing portion so as to reduce the adhesion area between the gasket body and the carrier film in the state where the carrier-film-equipped gasket and the pressing portion are positioned, and peeling the carrier film in which the adhesion area between the gasket body and the carrier film is reduced from the gasket body against adhesive force in the state where the gasket body is fixed to a base.

### Effect

In peeling the carrier film from the gasket body against adhesive force, required peeling force can be reduced and, even when the gasket body adheres to the carrier film, the carrier film can be easily removed from the gasket body.

### Brief Description of Drawings

FIGS. 1 are views illustrating an example of a carrier-film-equipped gasket handled by a handling method according to an embodiment, in which FIG. 1(A) is a plan view thereof and FIG. 1(B) is a cross-sectional view of a principal portion thereof and an enlarged cross-sectional view along the C-C line in FIG. 1(A).
FIGS. 2(A) to 2(D) each are explanatory views illustrating a manufacturing process of the gasket.
FIGS. 3(A) and 3(B) each are explanatory views of a preliminary process.
FIGS. 4(A) and 4(B) each are explanatory views of the preliminary process and explanatory views illustrating the width dimension of a pressing protrusion portion.
FIGS. 5(A) and 5(B) each are explanatory views of the preliminary process and explanatory views illustrating the width dimension of the pressing protrusion portion.
FIGS. 6(A) and 6(B) each are explanatory views of a peeling process.
FIGS. 7(A) and 7(B) each are cross-sectional views of a principal portion illustrating other examples of a gasket.
FIG. 8 is an explanatory view illustrating the plane arrangement of the pressing protrusion portion.
FIGS. 9(A) and 9(B) each are explanatory views of a preliminary process and explanatory views illustrating a preliminary process implementation state along the F-F line of FIG. 8.
FIGS. 10(A) and 10(B) each are explanatory views of a preliminary process according to another embodiment.
FIGS. 11(A) and 11(B) each are explanatory views of a peeling process according to another embodiment.
FIGS. 12(A) and 12(B) each are explanatory views of a gasket body attachment process according to another embodiment.
FIGS. 13 are views illustrating an example of a carrier-film-equipped gasket handled by a handling method according to another embodiment, in which FIG. 13(A) is a plan view thereof and FIG. 13(B) is a cross-sectional view of a principal portion thereof and an enlarged cross-sectional view along the G-G line in FIG. 13(A).
FIGS. 14(A) and 14(B) each are explanatory views in positioning the carrier-film-equipped gasket to a pressing portion of a removing device.
FIGS. 15 are views illustrating a rubber-only gasket according to a conventional example, in which FIG. 15(A) is a plan view thereof and FIG. 15(B) is a cross-sectional view of a principal portion thereof and an enlarged cross-sectional view along the D-D line in FIG. 15(A).
FIGS. 16 are views illustrating a carrier-film-equipped gasket according to a reference example, in which FIG. 16(A) is a plan view thereof and FIG. 16(B) is a cross-sectional view of a principal portion thereof and an enlarged cross-sectional view along the E-E line in FIG. 16(A).
FIGS. 17(A) to 17(D) each are explanatory views illustrating a manufacturing process of the gasket.
FIGS. 18(A) and 18(B) each are explanatory views of a peeling process.

### Description of Embodiments

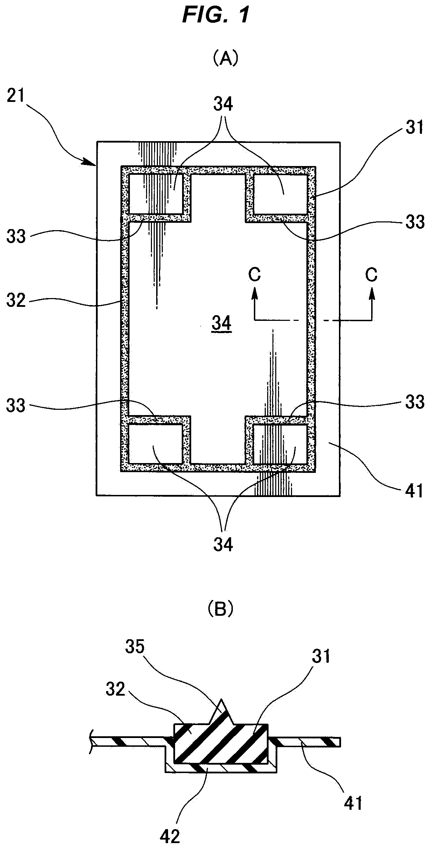

A method for handling a carrier-film-equipped gasket of an embodiment includes handling a carrier-film-equipped gasket 21 illustrated in FIGS. 1. The carrier-film-equipped gasket 21 contains a combination of a rubber-only gasket body 31 and a resin carrier film 41 holding the gasket body 31. The method of this embodiment is a method for removing the carrier film 41 from the gasket body 31. Although the gasket body 31 and the carrier film 41 are not stuck to each other, the gasket body 31 adheres to the carrier film 41 due to the material characteristic of the gasket body 31 or the like in some cases. The gasket body 31 is used as a fuel cell gasket, for example.

The gasket body 31 is molded into a planar shape (plate shape) as a whole by a predetermined rubber-like elastic body (for example, VMQ, PIB, EPDM, FKM, and the like), and an outer peripheral seal 32 sealing the periphery of a reaction surface of a fuel cell over the entire periphery is provided in a planar rectangular frame shape. In order to divide the reaction surface and each manifold of the fuel cell, an inner seal (manifold seals) 33 is integrally provided in each of both ends in the longitudinal direction of the outer peripheral seal 32. The reference numeral 34 designates a penetration portion (space portion) penetrating the gasket body 31 in the thickness direction thereof. The cross-sectional shape of the gasket body 31 is formed into a rectangular cross section as illustrated in FIG. 1(B) and a seal lip 35 having a triangular cross section is integrally molded in the upper surface thereof.

The carrier film 41 is a planar rectangular resin film approximately one size larger than the gasket body 31 and is provided with a gasket holder 42 having a three-dimensional shape for holding the gasket body 31 in a region which is a part on the plane thereof and overlaps with the gasket body 31 on the plane. As the resin film, a 0.2 mm thick polypropylene film is used and the polypropylene film is cut into a predetermined planar shape to be used. As the resin film, common resin materials other than polypropylene, such as polyethylene and polystyrene, are usable. The thickness of the film is preferably set to about 0.1 mm to 0.3 mm depending on the wire diameter or the cross-sectional shape of the gasket body 31. The carrier film 41 is also referred to as a carrier sheet or a gasket holding member.

The carrier-film-equipped gasket 21 is manufactured as follows. In manufacturing, a mold (rubber molding mold) injection-molding the rubber-only gasket body 31 is usable.

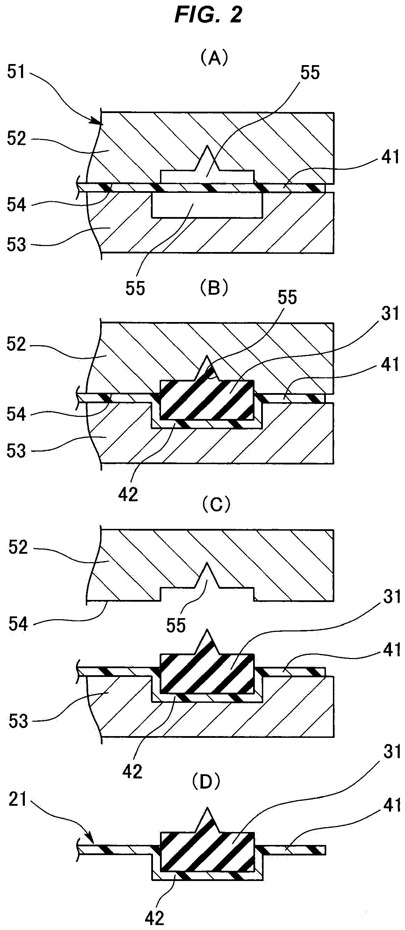

As a process, first, the carrier film 41 having a planar shape cut into a planar shape of a predetermined size is prepared, and then a mold 51 is mold-clamped in a state where the carrier film 41 is held between parting portions 54 of the mold 51 as illustrated in FIG. 2(A). The mold 51 contains a combination of an upper mold (one split mold) 52 and a lower mold (the other split mold) 53, in which one cavity 55 is provided corresponding to each of the parting portions 54 of both the molds 52, 53. The entire surface of the carrier film 41 originally has a planar shape, and therefore is brought into a state of crossing the inside of the cavities 55.

Subsequently, as illustrated in FIG. 2(B), a molding material for molding the gasket body 31 is filled into the cavities 55, and then heated, for example, to mold the gasket body 31. When the molding material is filled into the cavities 55, a part on the plane of the carrier film 41 is pressed against the inner surface of the cavity 55 of the lower mold 53 by the molding material filling pressure to be deformed (plastic deformation) into the shape along the inner surface of the cavity 55, whereby the gasket holder 42 having a three-dimensional shape is molded.

Subsequently, after the molding of the gasket body 31, the mold is opened as illustrated in FIG. 2(C), and then the gasket body 31 and the carrier film 41 are simultaneously taken out from the mold 51 as illustrated in FIG. 2(D). The taken-out gasket body 31 and carrier film 41 are brought into a combined state where the gasket body 31 is held by the carrier film 41. Then, a product is carried or stored, for example, in the combined state. The gasket body 31 held by the carrier film 41 is hard to be twisted, for example, and thus the handling workability can be further improved than in the case of handling the gasket body 31 alone.

The gasket body 31 and the carrier film 41 are not stuck to each other. However, the gasket body 31 has adhesiveness on the surface thereof due to the material characteristic of the gasket body 31, the circumstances of the molding by the mold 51, or the like, so that the gasket body 31 adheres to the carrier film 41 due to the adhesiveness in some cases. Hence, in this embodiment, work of removing the carrier film 41 from the gasket body 31 is performed in the following procedure.

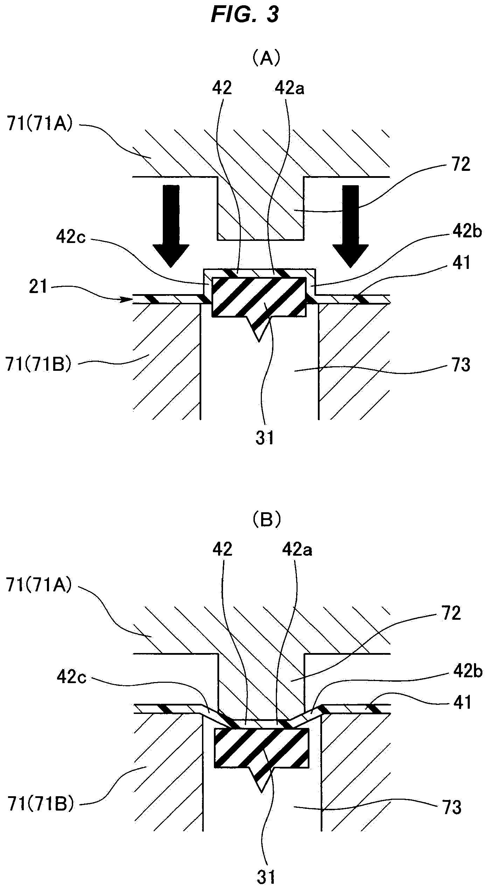

First, as illustrated in FIGS. 3(A), 3(B) as a preliminary process (pretreatment processing), the carrier-film-equipped gasket 21 is set to a pressing portion 71 of a removing device, and then the gasket body 31 is pressed from the carrier film 41 side using the pressing portion 71, whereby the adhesion area of the gasket body 31 and the carrier film 41 is reduced.

As described above, the carrier film 41 is provided with the gasket holder 42 having a three-dimensional shape deformed along the outer shape of the gasket body 31 in a region overlapping with the gasket body 31 on the plane. The carrier film 41 and the gasket body 31 adhere to each other in a state where the gasket body 31 is partially or entirely stored inside the gasket holder 42 having the three-dimensional shape. Therefore, the adhesion area of the carrier film 41 and the gasket body 31 is specified by the area of the inner surface of the gasket holder 42.

The gasket body 31 has a rectangular cross section. Therefore, the details of the adhesion area of the gasket body 31 is the sum of the area of a bottom surface portion 42a of the gasket holder 42 adhering to the bottom surface of the gasket body 31, the area of one side surface portion 42b of the gasket holder 42 adhering to a part of one side surface of the gasket body 31, and the area of the other side surface portion 42c of the gasket holder 42 adhering to a part of the other side surface of the gasket body 31. In order to reduce the adhesion area containing the sum of the areas, when the gasket body 31 is pressed from the carrier film 41 side using the pressing portion 71 as described above, the one side surface portion 42b of the gasket holder 42 is peeled from the one side surface of the gasket body 31, the other side surface portion 42c of the gasket holder 42 is peeled from the other side surface of the gasket body 31, and the bottom surface portion 42a of the gasket holder 42 is peeled from the bottom surface of the gasket body 31 in a part (both ends in the width direction) thereof as illustrated in FIG. 3(B). As a result, the remaining adhesion portion is only a part (a part in the center in the width direction) of the bottom surface portion 42a of the gasket holder 42, and thus the preliminary process is completed.

In order to implement the preliminary process, a pressing side constituent component 71A of the pressing portion 71 is provided with a pressing protrusion portion 72 for pressing the gasket body 31 from the carrier film 41 side (the side of bottom surface portion 42a of the gasket holder 42). Correspondingly, a pressing target side constituent component (base) 71B of the pressing portion 71 is provided with a receiving space 73 for temporarily storing the gasket body 31 displaced by the pressing.

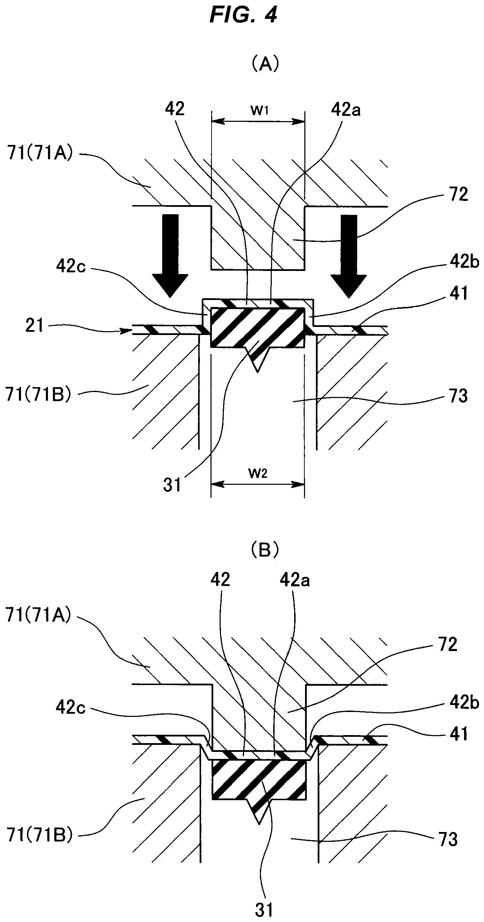

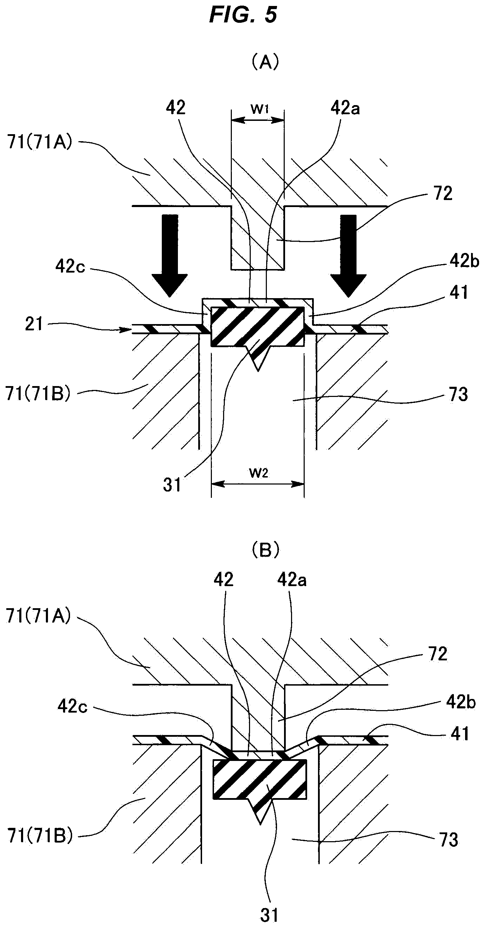

In the pressing protrusion portion 72, a width dimension w₁ is set to the size equal to or larger than a width dimension w₂ of the gasket body 31 as illustrated in FIGS. 4(A), 4(B). As another embodiment, the width dimension w₁ of the pressing protrusion portion 72 may be set to be smaller than the width dimension w₂ of the gasket body 31 as illustrated in FIGS. 5(A), 5(B). In the latter case, the pressing protrusion portion 72 presses only the part (the part in the center in the width direction) of the bottom surface of the gasket body 31, and therefore the one side surface portion 42b of the gasket holder 42 is peeled from the gasket body 31, the other side surface portion 42c of the gasket holder 42 is peeled from the gasket body 31, and the part (the both ends in the width direction) of the bottom surface portion 42a of the gasket holder 42 is also peeled from the gasket body 31 as described above. Therefore, the remaining adhesion portion is only the part (the part in the center in the width direction) of the bottom surface portion 42a of the gasket holder 42, and thus the adhesion area can be considerably reduced.

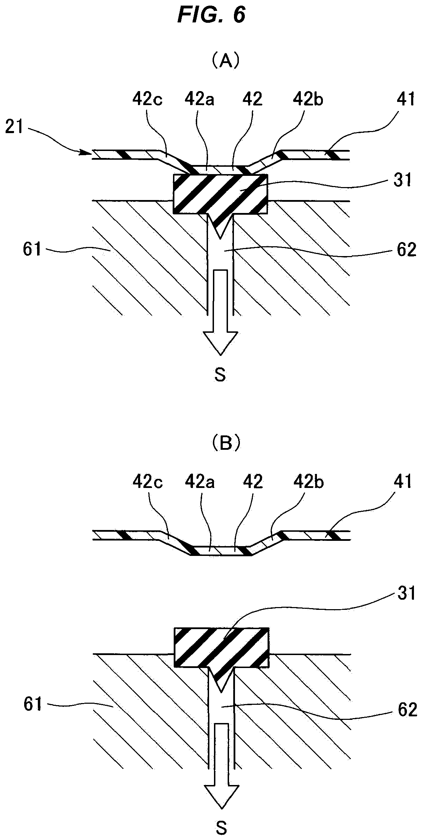

Then, subsequent to the preliminary process, the carrier-film-equipped gasket 21 is set to an adsorption portion 62 of an evacuation mechanism 61 in the removing device, the gasket body 31 is fixed (adsorbed) by performing evacuation (arrow S), and then the carrier film 41 is peeled from the gasket body 31 using a chuck mechanism (not illustrated) or the like in this state as illustrated in FIGS. 6(A), 6(B). At this time, the adhesion area of the carrier film 41 and the gasket body 31 has already been reduced in the preliminary process, and therefore the carrier film 41 can be removed from the gasket body 31 with relatively low peeling force in a relatively short peeling processing time. Therefore, as expected, even when the gasket body 31 adheres to the carrier film 41, the carrier film 41 can be easily removed and the removal work of the carrier film 41 can be facilitated.

The cross-sectional shape of the carrier-film-equipped gasket 21 containing the combination of the rubber-only gasket body 31 and the resin carrier film 41 can be variously considered and is not limited to the cross-sectional shape illustrated in the FIG. 1(B).

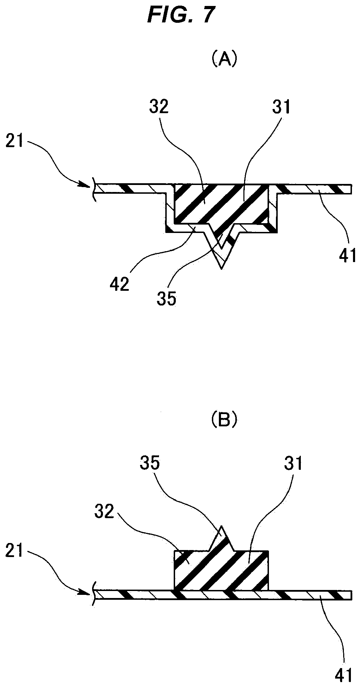

For example, in an example illustrated in FIG. 7(A), the seal lip 35 is integrally molded on a bottom surface portion instead of the upper surface of the gasket body 31 of the rectangular cross section, and thus the shape of the gasket holder 42 having a three-dimensional shape in the carrier film 41 is also changed.

Moreover, the disclosure also includes a case where the carrier film 41 is not provided with the gasket holder 42 having a three-dimensional shape and is used in the planar shape as illustrated in FIG. 7(B). In this case, the adhesion area of the carrier film 41 and the gasket body 31 is specified by the area of the bottom surface of the gasket body 31. Therefore, when the above-described preliminary process is implemented, the adhesion area specified by the area of the bottom surface of the gasket body 31 reduces, and, specifically, the carrier film 41 is peeled in each of both ends in the width direction of the bottom surface of the gasket body 31.

Furthermore, with respect to the reduction in the adhesion area by the implementation of the preliminary process, it is also considered to configure the pressing protrusion portion 72 provided in the pressing side constituent component 71A of the pressing portion 71 as follows.

In the above-described embodiment, the pressing protrusion portion 72 is configured to be provided throughout the entire length in the longitudinal direction of the gasket body 31 and to press the gasket body 31 throughout the entire length in the longitudinal direction. As another embodiment, the pressing protrusion portion 72 may be configured so that a plurality of protrusions is arranged at intervals along the longitudinal direction of the gasket body 31 and a space between the protrusions adjacent to each other may be set as a non-pressing portion not pressing the gasket body 31.

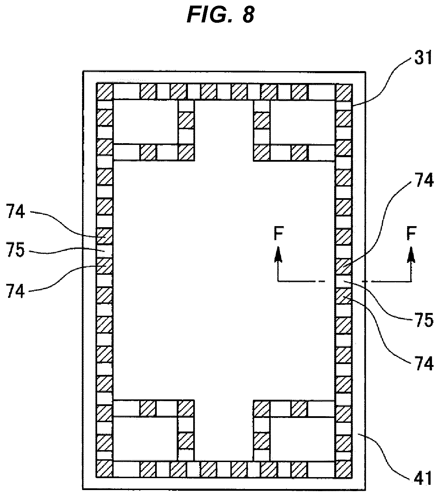

FIG. 8 illustrates an example of the arrangement state of the plurality of protrusions in this case. Hatched portions in FIG. 8 illustrate regions 74 where the protrusions are disposed. White portions in FIG. 8 illustrate regions 75 where the protrusions are not disposed and which are set as the non-pressing portions. As illustrated in FIG. 8, both the regions 74, 75 are alternately arranged along the longitudinal direction of the gasket body 31.

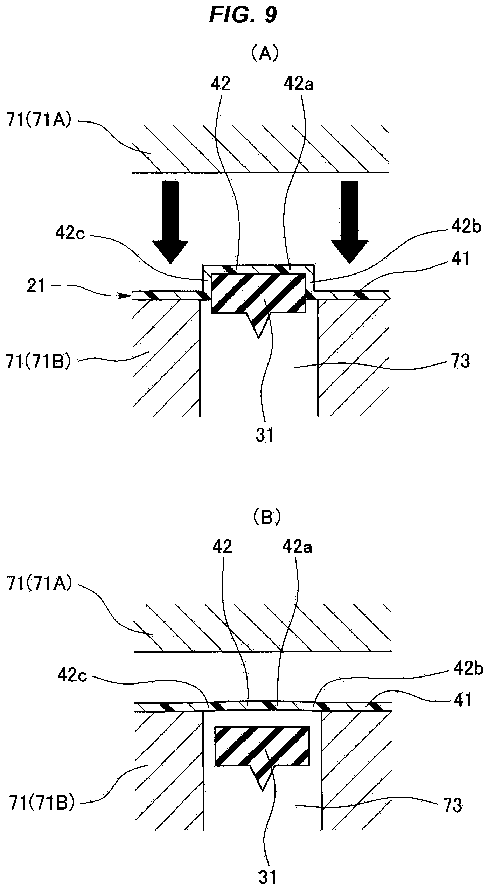

According to such a configuration, in the regions 74 where the protrusions are disposed, the pressing protrusion portion 72 presses the gasket body 31 through the carrier film 41 as illustrated in FIGS. 4 and FIGS. 5. Therefore, in the pressed regions, only the regions remain as portions where the carrier film 41 and the gasket body 31 adhere to each other. On the other hand, there are no protrusions as illustrated in FIGS. 9(A), 9(B) in the regions 75 where the protrusions are not disposed and which are set as the non-pressing portion, and therefore the carrier film 41 and the gasket body 31 do not adhere to each other and peeling occurs in this portion. Therefore, the adhesion area remaining after the pretreatment can be considerably reduced.

The above-described preliminary process of reducing the adhesion area between the gasket body 31 and the carrier film 41 and the above-described peeling process of removing the carrier film 41 from the gasket body 31 are continuously or simultaneously implemented, whereby the working efficiency can be improved. Hereinafter, an embodiment in this case is described.

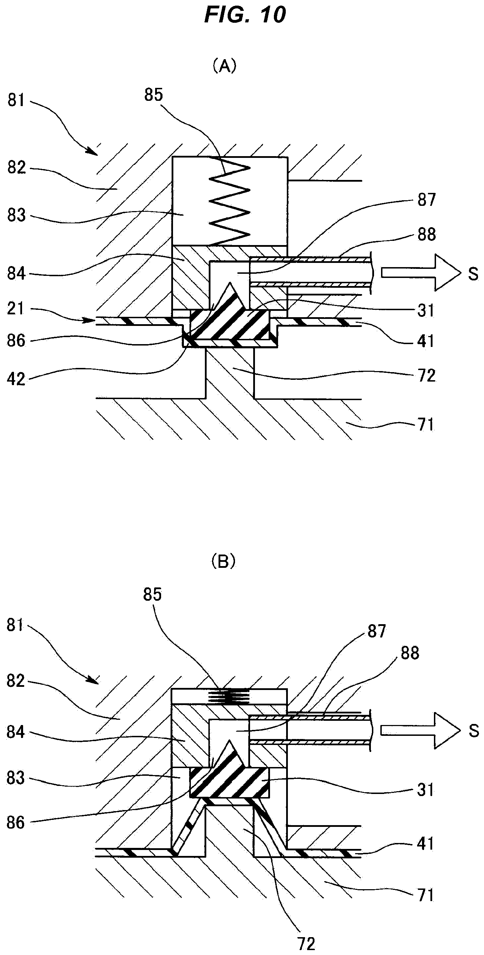

As illustrated in FIG. 10(A), a removing device 81 is provided with a molded article holder (base) 82 on the stationary side and the molded article holder 82 is provided with a recess (cylinder-like recess) 83 to face the pressing protrusion portion 72 of the pressing portion 71. In the recess 83, a slide portion (piston-like slide member) 84 on the movable side is slidably attached and a return spring 85 returning the slide portion 84 to a slide starting position is provided in the bottom of the recess 83.

The slide portion 84 is provided, as an opening portion, with a gasket body holder 86 for holding the gasket body 31 in the slide portion 84. The gasket body holder 86 is provided with a suction flow passage 87. The suction flow passage 87 is a flow passage for sucking and fixing the gasket body 31 to the gasket body holder 86 and leads to the opening portion. The suction flow passage 87 is connected to a suction source, such as an evacuation pump, which is not illustrated through piping 88.

As illustrated in FIG. 10(A), in starting the preliminary process, the carrier-film-equipped gasket 21 is set (fixed) to the molded article holder 82 of the removing device 81 so that the gasket body 31 is located in the gasket body holder 86 of the slide portion 84.

Subsequently, the suction source is driven to start evacuation (arrow S), so that the gasket body 31 is sucked and fixed to the gasket body holder 86 of the slide portion 84, and then the gasket body 31 is pressed from the carrier film 41 side with the pressing protrusion portion 72 of the pressing portion 71 as illustrated in FIG. 10(B) in the sucked and fixed state, whereby the adhesion area between the gasket body 31 and the carrier film 41 is reduced. When the gasket body 31 is pressed from the carrier film 41 side with the pressing protrusion portion 72 of the pressing portion 71, the slide portion 84 is also pressed, so that the slide portion 84 slides and moves against the elasticity of the return spring 85.

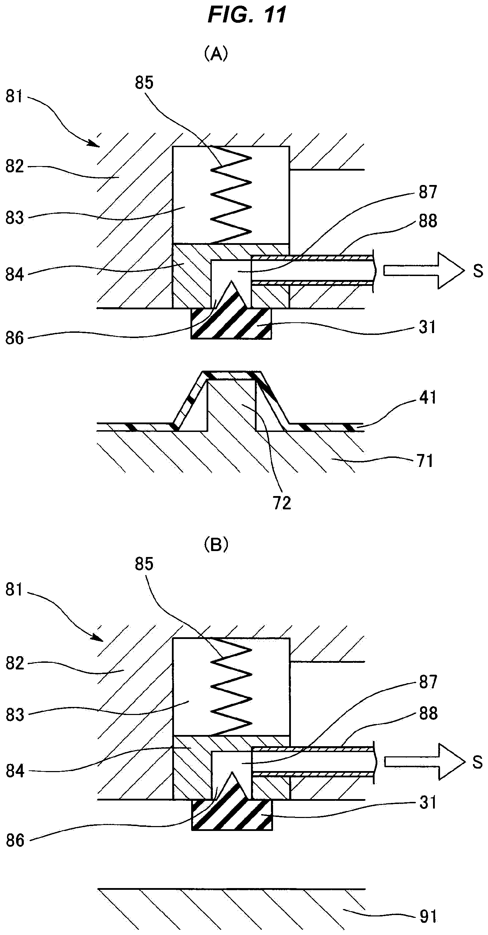

Subsequently, the carrier film 41 is fixed to the pressing portion 71, and then the pressing portion 71 is returned (retreated) in this state as illustrated in FIG. 11(A). Then, the gasket body 31 is still sucked and fixed to the molded article holder 82, and therefore the carrier film 41 is removed from the gasket body 31.

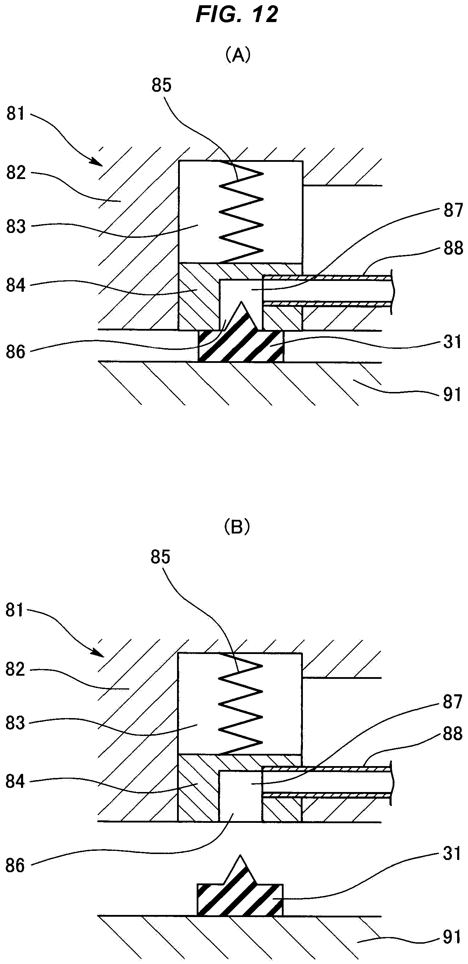

Subsequently, the gasket body 31 in the state of being sucked and fixed to the molded article holder 82 as illustrated in FIG. 11(B) is faced to an attachment mating component 91 of a fuel cell separator or the like, an adhesive is applied to the gasket body 31 as necessary, and then the gasket body 31 is attached to the mating component 91 as illustrated in FIG. 12(A), whereby an attachment process is completed as illustrated in FIG. 12(B).

Therefore, by the use of the removing device 81 provided with the press·slide and suction mechanisms, the preliminary process and the peeling process can be continuously or simultaneously implemented, whereby the working efficiency can be improved.

In pressing the gasket body 31 from the carrier film 41 side with the pressing protrusion portion 72 of the pressing portion 71, the gasket body 31 needs to be pressed after accurately positioning the pressing protrusion portion 72 and the gasket body 31 because the width of the gasket body 31 is generally small. When the positioning is insufficient, there is a concern that the gasket body 31 is obliquely inclined in pressing or the peeling area in the preliminary process decreases, for example, so that the subsequent removal work cannot be smoothly continued.

Thus, as a countermeasure against the above, it is preferable that positioning means by recess/projection engagement are provided beforehand between the pressing portion 71 and the carrier-film-equipped gasket 21 and, when the gasket body 31 is pressed from the carrier film 41 side with the pressing protrusion portion 72 of the pressing portion 71, the gasket body 31 is pressed after performing the positioning on the plane with the positioning means by the recess/projection engagement. The positioning means by recess/projection engagement are configured as follows.

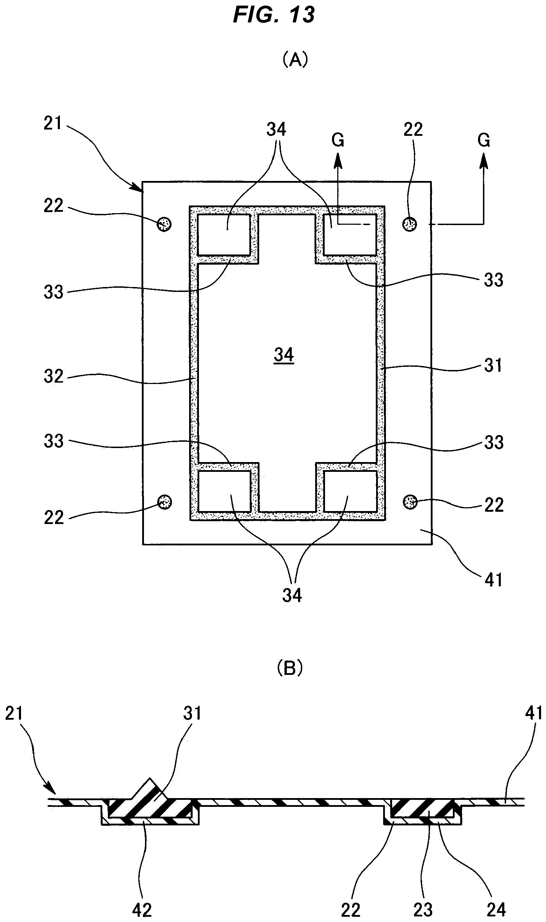

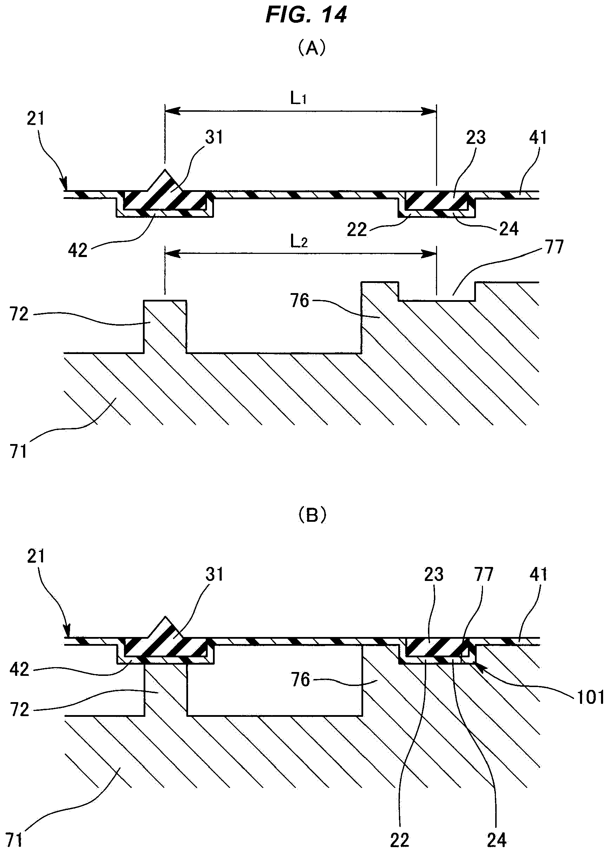

Positioning projections 22 are provided on the plane of the carrier-film-equipped gasket 21 as illustrated in FIGS. 13(A), 13(B). Correspondingly, positioning recesses 77 are provided on the plane of the pressing portion 71 as illustrated in FIGS. 14(A), 14(B). A positioning means 101 by recess/projection engagement positioning the pressing portion 71 and the carrier-film-equipped gasket 21 on the plane is configured by a combination of the positioning projection 22 and the positioning recess 77.

Two or more (four in the figure) of the positioning projections 22 are provided on the plane of the carrier film 41 at a predetermined distance L₁ from the gasket body 31. The positioning projection 22 contains a positioning rubber 23 and a positioning rubber holder 24 provided in the carrier film 41 to hold the positioning rubber 23. The positioning rubber 23 may be molded simultaneously with the gasket body 31 using the same mold as that of the gasket body 31 and in the same manner as that of the gasket body 31. The positioning rubber holder 24 may be molded simultaneously with the gasket holder 42 using the same mold as that of the gasket holder 42 and in the same manner as that of the gasket holder 42.

On the other hand, two or more (four in the figure) of the positioning recesses 77 are provided on the plane of a mount 76 provided in the pressing portion 71 with a distance L₂ equivalent to the distance L₁ from the pressing protrusion portion 72 (L₁ = L₂).

Therefore, when the gasket body 31 is pressed from the carrier film 41 side with the pressing protrusion portion 72 of the pressing portion 71, the gasket body 31 is pressed after performing the positioning on the plane with the positioning means 101 by recess/projection engagement, whereby the pressing is performed in the state where the pressing protrusion portion 72 and the gasket body 31 are accurately positioned. This can prevent that the gasket body 31 is obliquely inclined or the peeling area in the preliminary process decreases, for example, due to insufficient positioning, so that the subsequent removal work cannot be smoothly continued.

The outside dimension of the carrier-film-equipped gasket 21 was set to 400 × 200 mm, the rubber cross section was set to 1 mm, silicone rubber was used as a rubber material, and the thickness of the carrier film 41 (thermoplastic film) was set to 0.1 mm and the positioning projections 22 having a diameter of 5 mm and a height of 3 mm and the positioning recesses 77 corresponding thereto were provided in four places, and then a removal test was performed. Then, it was able to be confirmed that a state where the carrier film 41 can be stably removed from the gasket body 31 is achieved.

The positioning projection 22 is simultaneously molded with the gasket body 31, whereby the positional relationship between the gasket body 31 and the positioning projection 22 can be molded with good accuracy. As a result, the positioning accuracy is improved in the removal process and the center in the width of the gasket body 31 can be surely pressed with the protrusion portion 72, so that the removal process can be smoothly performed.

Furthermore, the disclosure also includes the following embodiments.

### (a)

A method for removing a carrier film from a gasket body of a carrier-film-equipped gasket containing a combination of the rubber-only gasket body and a resin carrier film and holding the gasket body. This method includes implementing a peeling process of peeling the carrier film from the gasket body against adhesive force in a state where the gasket body is fixed to a base. As a preliminary process of the peeling process, the gasket body is pressed from the carrier film side with a pressing protrusion portion of a pressing portion, whereby the adhesion area of the gasket body and the carrier film is reduced, and then the peeling process is implemented in the state where the adhesion area is reduced. When the gasket body is pressed from the carrier film side with the pressing protrusion portion of the pressing portion, the gasket body is pressed after performing positioning on the plane with positioning means by recess/projection engagement provided beforehand between the pressing portion and the carrier-film-equipped gasket.

### (b)

In the method according to (a) above, the preliminary process of reducing the adhesion area of the gasket body and the carrier film and the peeling process of peeling the carrier film from the gasket body against adhesive force in the state where the adhesion area is reduced are successively carried out. When the gasket body is pressed from the carrier film side with the pressing protrusion portion of the pressing portion in the preliminary process, the gasket body is pressed after performing positioning on the plane with the positioning means by recess/projection engagement provided beforehand between the pressing portion and the carrier-film-equipped gasket.

### (c)

In the method according to (a) or (b) above, the carrier film is provided with a gasket holder having a three-dimensional shape deformed along the outer shape of the gasket body in a region overlapping with the gasket body on the plane. The carrier film and the gasket body adhere to each other in a state where the gasket body is partially or entirely stored inside the gasket holder. The adhesion area is specified by the area of the inner surface of the gasket holder. The preliminary process is carried out in order to reduce the adhesion area specified by the area of the inner surface of the gasket holder.

### (d)

In the method according to (a), (b), or (c) above, the pressing portion has a pressing protrusion portion pressing the gasket body from the carrier film side. In the pressing protrusion portion, the width dimension thereof is set to be smaller than the width dimension of the gasket body.

### (e)

In the method according to (a), (b), (c), or (d) above, the pressing portion has the pressing protrusion portion pressing the gasket body from the carrier film side. In the pressing protrusion portion, a plurality of protrusions is arranged at intervals along the longitudinal direction of the gasket body and a space between the protrusions is set as a non-pressing portion not pressing the gasket body.

### (f)

In the method according to (a), (b), (c), (d), or (e) above, the preliminary process and the peeling process are continuously or simultaneously carried out.

### (g)

In the method according to (f) above, in order to continuously or simultaneously carry out the preliminary process and the peeling process, the base has a slide portion relatively moving with respect to the base, a gasket body holder provided in the slide portion, and a suction flow passage provided to be opened in the gasket body holder.

### Description of Reference Numerals

21 carrier-film-equipped gasket
22 positioning projection
23 positioning rubber
24 positioning rubber holder
31 gasket body
32 outer peripheral seal
33 inner seal
34 penetration portion
35 seal lip
41 carrier film
42 gasket holder
42a bottom surface portion
42b, 42c side surface portion
51 mold
52 upper mold
53 lower mold
54 parting portion
55 cavity
61 evacuation mechanism
61a adsorption portion
71 pressing portion
71A pressing side constituent component
71B pressing target side constituent component
72 pressing protrusion portion
73 receiving space
74 region where protrusion is disposed
75 region where protrusion is not disposed and which is set as non-pressing portion
76 mount
77 positioning recess
81 removing device
82 molded article holder (base)
83 recess
84 slide portion
85 return spring
86 gasket body holder
87 suction flow passage
88 piping
91 attachment mating component
101 positioning means

## Claims

1. A method for handling a carrier-film-equipped gasket comprising:
coupling positioning means by recess/projection fitting provided between the carrier-film-equipped gasket, which contains a combination of a rubber-only gasket body and a resin carrier film holding the gasket body, and a pressing portion pressing the gasket body from the carrier film side in such a manner as to position the carrier-film-equipped gasket and the pressing portion on a plane;
pressing the gasket body from the carrier film side with a pressing protrusion portion of the pressing portion so as to reduce an adhesion area between the gasket body and the carrier film in a state where the carrier-film-equipped gasket and the pressing portion are positioned; and
peeling the carrier film in which the adhesion area between the gasket body and the carrier film is reduced from the gasket body against adhesive force in a state where the gasket body is fixed to a base.

2. The method for handling a carrier-film-equipped gasket according to Claim 1, wherein
the coupling of the positioning means is carried out by recess/projection fitting of a positioning projection provided in the carrier-film-equipped gasket and having a positioning rubber and a positioning rubber holder of the carrier film holding the positioning rubber and a positioning recess provided in the pressing portion.

3. The method for handling a carrier-film-equipped gasket according to Claim 2, wherein
the positioning rubber is simultaneously molded with the gasket body with a mold.
